Europäisches Patentamt

European Patent Office

Office européen des brevets

(11) Publication number: **0 379 204 B1**

## EUROPEAN PATENT SPECIFICATION

(45) Date of publication of patent specification: **06.04.94**

(51) Int. Cl.5: **C02F 1/72**, C02F 1/52, C01G 49/14

(21) Application number: **90101033.0**

(22) Date of filing: **18.01.90**

(54) **Liquid oxidizing method and apparatus.**

(30) Priority: **20.01.89 JP 11162/89**

(43) Date of publication of application:
**25.07.90 Bulletin 90/30**

(45) Publication of the grant of the patent:
**06.04.94 Bulletin 94/14**

(84) Designated Contracting States:
**AT DE GB IT SE**

(56) References cited:
**FR-A- 2 317 231**
**GB-A- 661 058**

**CHEMICAL ABSTRACTS, vol. 90, no. 12, 19th March 1979, page 110, abstract no. 89451b, Columbus, Ohio, US; A. ANDRES SOLER et al.: "Application of contact in an ejector to the oxidation and precipitation of iron in solutions. I. Principles and overall mechanism of the process"**

**CHEMICAL ABSTRACTS, vol. 107, no. 8, 24th August 1987, page 142, abstract no. 61510r, Columbus, Ohio, US; & JP-A-61 286 229 (NIT-TETSU MINING CO., LTD) 16-12-1986**

**CHEMICAL ABSTRACTS, vol. 95, no. 14, 5th October 1981, page 135, abstract no. 117818a, Columbus, Ohio, US;**

(73) Proprietor: **SUGITA WIRE MFG. Co., LTD.**
**1-12, Higashisumida 3-chome**
**Sumida-ku Tokyo 131(JP)**

(72) Inventor: **Kodama, Shigemi, c/o SUGITA WIRE MFG. CO., LTD.**
**1-12, Higashisumida 3-chome**
**Sumida-ku, Tokyo 131(JP)**

(74) Representative: **Patentanwälte Grünecker, Kinkeldey, Stockmair & Partner**
**Maximilianstrasse 58**
**D-80538 München (DE)**

## Description

## BACKGROUND OF THE INVENTION

### 1. Field of the Invention:

This invention relates to the oxidation of a liquid, and more particularly, to a method and an apparatus for oxidizing a liquid containing the matter to be oxidized, such as ferrous or sulfurous ions, in the presence or absence of an oxidizing catalyst.

### 2. Description of the Prior Art:

There are a variety of systems which are used for the oxidizing treatment of a liquid containing the matter to be oxidized. They include a system of the type which is used for oxidizing sludge, industrial waste water, a liquid which has absorbed sulfur as a result of the desulfurization of smoke, or the like, and a system of the type which is used for producing a particular treating agent by oxidation.

The former type of system is used for oxidizing, for example, a liquid which has absorbed sulfurous ions as a result of the desulfurization of smoke, or waste water from a factory containing dissolved ferrous ions. It has, however, a number of disadvantages, particularly if the liquid to be treated has a low pH value. The treatment of the liquid requires a long time of reaction by employing a large amount of oxidizing agent in a large apparatus. It sometimes calls for the application of heat. Therefore, it is expensive and yet has a low reaction efficiency.

The latter type of system is used for manufacturing, for example, iron polysulfate which has recently drawn much attention as a coagulant. According to the disclosure of JP-A-53195/1974, an acid solution containing ferrous sulfate which occurs as a by-product when waste sulfuric acid is recovered from, for example, the process for pickling iron and steel is oxidized with an oxidizing agent, such as air or oxygen, in the presence of an oxidizing catalyst, such as nitrogen oxide, to produce a basic inorganic high molecular iron polysulfate containing an OH group between ferric sulfate and $SO_4^{-2}$. Likewise, JP-B-23266/1978 discloses the manufacture of a basic coagulant comprising a double salt formed from iron polychloride and iron sulfate. In either event, however, the liquid to be oxidized has so low a pH value that its oxidation requires a large amount of oxidizing agent, and it has been difficult to manufacture iron polysulfate at a low cost and with a high efficiency.

FR-A-2317231 discloses the oxidation of FeO in an acidic solution by oxygen and air in a closed circuit which comprises a Venturi arrangement. DE-A-2436124 proposes the use of nitrous oxides or their salts as catalysts for the oxidation of an iron (II) solution.

## SUMMARY OF THE INVENTION

Under these circumstances, it is an object of this invention to provide a system which can oxidize a liquid containing the matter to be oxidized with a high efficiency and at a low cost.

According to the conventional oxidizing systems of the nature to which this invention pertains, it has been usual practice to put the liquid to be treated in a reaction vessel equipped with a stirrer and introduce an oxidizing agent, such as air or oxygen, and an oxidizing catalyst into the liquid, while stirring it. The stirrer, however, has a limited stirring speed and can only stir the liquid and the oxidizing agent comparatively slowly in the whole reaction vessel. Therefore, the matter to be oxidized and the oxidizing agent do not contact each other effectively, but undergo only a slow oxidizing reaction. Moreover, as the oxidizing agent is simply supplied into the reaction vessel, it is necessary to supply an uneconomically large amount of oxidizing agent.

Under the circumstances, I, the inventor of this invention, have devoted myself to a search for a means for permitting the liquid to be treated and the oxidizing agent to contact each other faster than they can when merely stirred by a stirrer, and also for enabling an efficient oxidizing reaction if the minimum amount of oxidizing agent is supplied to the area where it contacts the liquid. As a result, I have thought of providing a liquid circulating circuit with an ejector to achieve a rapid oxidizing reaction. I have found that the ejector forms a jet stream of the liquid to be treated into which oxygen, or both oxygen and an oxidizing catalyst are drawn to thereby realize a more rapid and efficient oxidizing reaction.

However, even the system including an ejector has a low reaction efficiency due to the escape of the oxidizing agent, and the infiltration of any gas that is undesirable for an oxidizing reaction, if a reaction vessel not closed, but defining an open oxidizing circuit is used as in the conventional system. Therefore, I have decided to construct a closed oxidizing circuit, as well as using oxygen as the oxidizing agent.

Thus, this invention essentially provides an oxidizing system forming a closed circuit in which a liquid containing the matter to be oxidized is circulated, and which is provided with an ejector for forming a jet stream of the liquid into which oxygen (and an oxidizing catalyst) is supplied, so that the oxygen (and the catalyst) may be mixed and contacted rapidly with the matter to be oxidized and oxidize it efficiently.

## BRIEF DESCRIPTION OF THE DRAWINGS

FIGURE 1 is a schematic sectional view of the oxidizing apparatus as used in EXAMPLE 1 which will hereinafter be described;

FIGURE 2 is a schematic sectional view of the oxidizing apparatus as used in EXAMPLE 2;

FIGURE 3 is a schematic sectional view of the oxidizing apparatus as used in EXAMPLE 3;

FIGURE 4 is a graph showing the efficiency of iron polysulfate production (or the rate of oxidation) as achieved in EXAMPLE 1; and

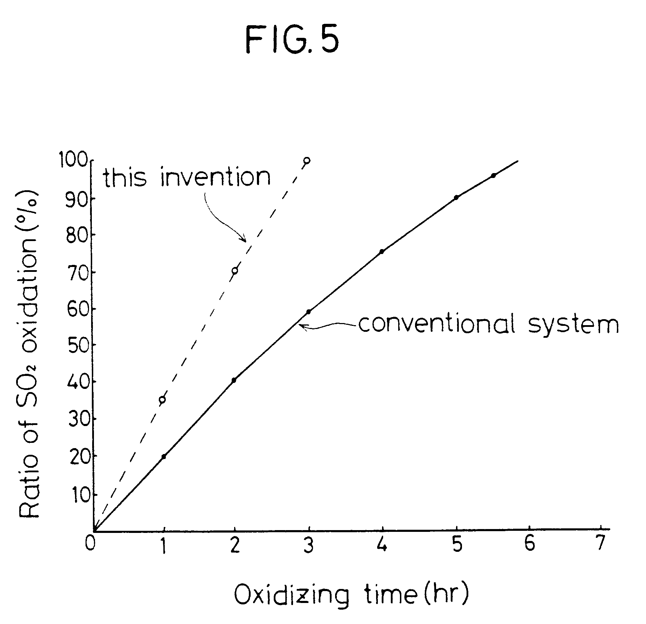

FIGURE 5 is a graph showing the ratio of oxidation as obtained in EXAMPLE 1 from the treatment of a liquid resulting from the desulfurization of smoke.

## DETAILED DESCRIPTION OF THE INVENTION

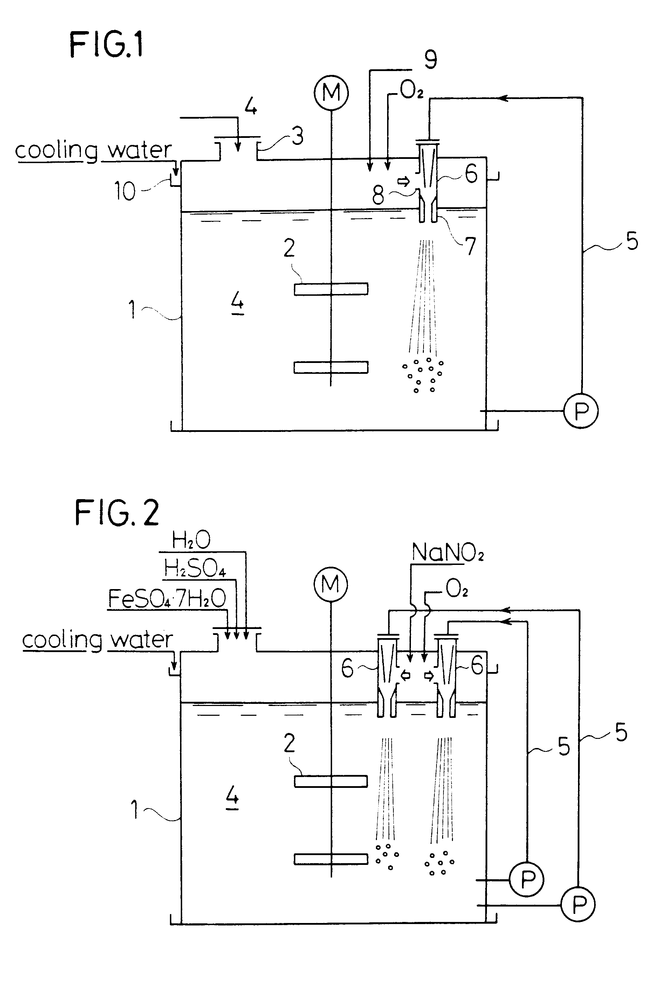

Description will be made of the oxidizing system of this invention with reference to FIGURE 1. FIGURE 1 shows an oxidizing apparatus comprising a reaction vessel 1 of the closed construction containing a stirrer 2 driven by a motor M. The vessel 1 has a liquid supply port 3 through which the liquid 4 to be treated can be introduced into the vessel 1. A bypass 5 is connected to the vessel 1 and is provided with a pump P for circulating the liquid. The vessel 1 and the bypass 5 form a closed circuit. The closed circuit is provided with an ejector 6 at the top of the vessel 1 or in the bypass 5.

The ejector 6 comprises a nozzle 7, and an inlet 8 through which an oxidizing agent (e.g. oxygen, $O_2$) is supplied into the nozzle 7. The nozzle 7 forms a rapid jet stream of the liquid to be treated, and the oxidizing agent entering the inlet 8 is supplied into the jet stream. This enables the efficient mixing of oxygen (and an oxidizing catalyst) with the matter to be oxidized which the liquid contains, and thereby an efficient oxidizing reaction, as well as a reduction in the amount of the oxidizing agent which is required.

The catalyst may be mixed in the oxidizing agent which is supplied into the ejector 6 through its inlet 8. The supply of the catalyst with the oxidizing agent into the jet stream in the ejector 6 enables a still more efficient oxidizing reaction, as well as a reduction in the amount of the catalyst which is required.

If the ejector 6 is provided at the top of the vessel 1 as shown in FIGURE 1, the vessel 1 has a vacant space above the liquid 4. The oxidizing agent is stored in the vacant space and is smoothly drawn into the ejector 6 through the inlet 8 by a negative pressure created by the jet stream formed in the ejector 6. The ejector 6 has a lower end which is usually so positioned as to be dipped in the liquid, though it may alternatively be located in the space above the liquid.

If the ejector 6 is provided in the bypass 5, it is necessary to provide at least an ejector portion in the vicinity of the inlet 8 with a vacant space into which the oxidizing agent can be supplied. The vacant space in the ejector 6 may be connected with the vacant space in the vessel 1.

Although the apparatus of FIGURE 1 has only one ejector, it is also possible to provide two or more ejectors. Although FIGURE 1 shows a batch system having a single closed oxidizing circuit, it is also possible to construct a continuous system having a plurality of closed circuits connected to one another.

The liquid supply port 3 is of the closable construction. The vessel 1 has also a port through which the oxidizing agent (and the catalyst g) is supplied into the vessel 1, and a port through which the liquid which has been treated is discharged from the vessel 1. All of these ports are of the closable construction.

The catalyst may be appropriately selected to suit the matter to be oxidized.

## BEST MODE OF CARRYING OUT THE INVENTION

The invention will now be described more specifically with reference to a number of examples. It is, however, to be understood that this invention is not limited to these examples, but is applicable to various other systems for oxidizing treatment.

## EXAMPLE 1

This example was directed to the manufacture of iron polysulfate as a coagulant by employing the apparatus as shown in FIGURE 1.

An appropriate amount of a mixture of ferrous sulfate ($FeSO_4 \cdot 7H_2O$), waste sulfuric acid ($H_2SO_4$) and water ($H_2O$) was supplied into the reaction vessel as the liquid to be treated. The sulfuric acid was employed in an amount giving a molar ratio of $SO_4{}^{-2}/Fe^{+2}$ which was larger than 1.0, but smaller than 1.5. The vacant space in the closed vessel was purged with oxygen. The pump was started to circulate the liquid through the bypass, so that the ejector might form a continuous jet stream of the liquid. Oxygen was supplied in the amount equal to one-third of the equivalent of $Fe^{+2}$, while at the same time, sodium nitrite, $NaNO_2$, was supplied at a rate of 0.8 kg/m³ per hour as an oxidizing catalyst.

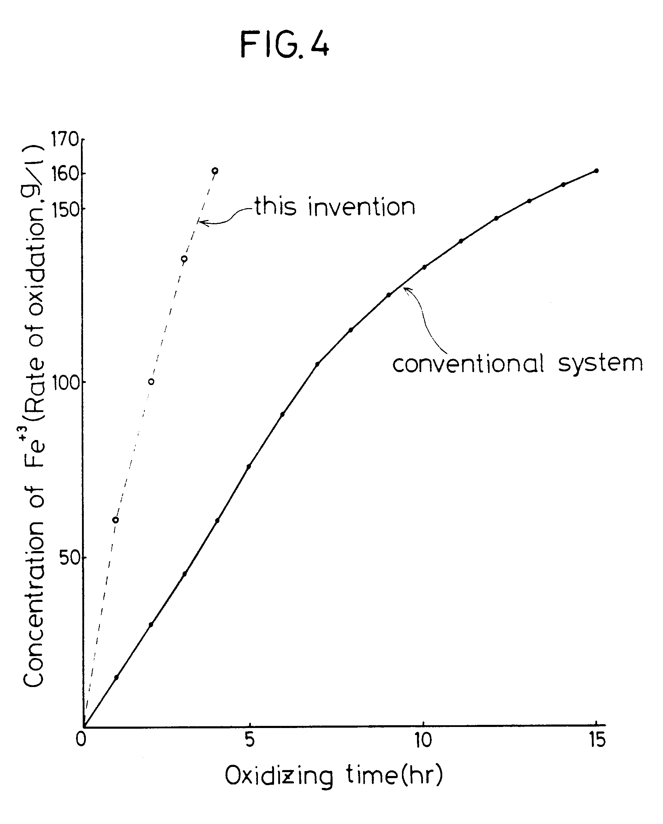

As a result, the ferrous sulfate in the liquid flowing down the ejector was oxidized to form viscous iron polysulfate below the ejector. The oxidizing reaction which took place showed an efficiency which was about four times higher than what could be achieved in the production of iron polysulfate by the conventional system, as is obvious from FIGURE 4.

Iron polysulfate is expressed by the formula $[Fe_2(OH)_n \bullet (SO_4)_{3-\frac{n}{2}}]_m$, where n is larger than 2, and m = f(n). It is a substance in the form of a solution of a kind of high molecular basic complex salt of ferric sulfate. It contains a large amount of polymeric iron complex ions, such as $[Fe(H_2O)_6]^{-3}$, $[Fe_2(OH)_3]^{-3}$ or $[Fe(OH)_2]^{-3}$, and has a high level of flocculating or coagulating property.

It is economical to use NO, $NO_2$ or other nitrogen oxide as the catalyst.

EXAMPLE 2

The procedures of EXAMPLE 1 were followed for treating a liquid resulting from the desulfurization of smoke. The system of this invention showed a ratio of oxidation which was about twice higher than what could be obtained by the conventional system.

EXAMPLE 3

The procedures of EXAMPLE 1 wwere followed for producing iron polysulfate, except that the apparatus was modified as shown in FIGURE 2. The modified apparatus had two bypasses 5 connected to the reaction vessel and each having an outlet opening toward the vacant space in the top portion of the vessel, and two ejectors 6 each connected to one of the bypasses 5.

The modified system showed a reaction efficiency which was about twice higher than what had been obtained in EXAMPLE 1.

EXAMPLE 4

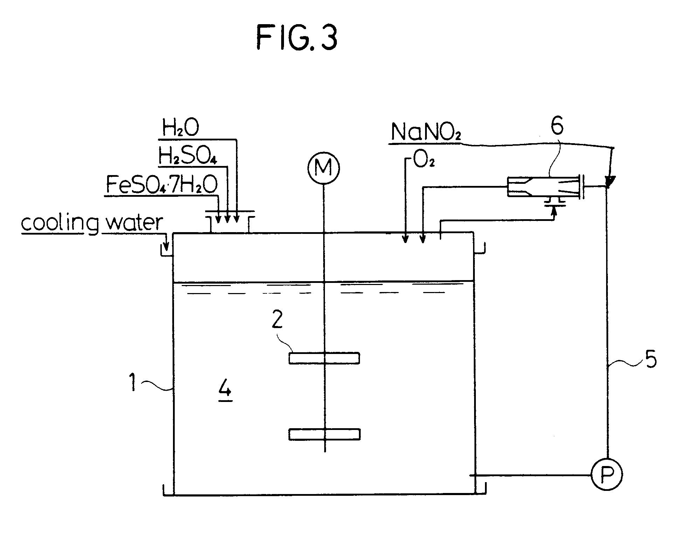

The procedures of EXAMPLE 1 were followed for producing iron polysulfate, except that the apparatus was modified as shown in FIGURE 3, i.e. the ejector 6 was provided in the bypass 5 outside the reaction vessel 1. The modified system showed a reaction efficiency which was comparable to what had been obtained in EXAMPLE 1.

Although the invention has been described with reference to the examples directed to the manufacture of iron polysulfate, it is easy to produce a double salt of iron polychloride and iron sulfate, too, if the liquid to be treated further contains a solution of iron chloride.

INDUSTRIAL APPLICABILITY

This invention makes it possible to accomplish an efficient and economical oxidizing treatment of a liquid by employing a compact system defining a closed circuit provided with an ejector for forming a jet stream of the liquid into which an oxidizing agent is supplied to cause an oxidizing reaction, as hereinabove described. Therefore, the invention is not only useful for the treatment of waste water, such as from factories, but also applicable to a system for making a particular product at a low cost by oxidizing a liquid.

**Claims**

1. A method for oxidizing a liquid containing matter to be oxidized in a closed circuit comprising the steps of:
    (a) purging a reservoir (4) in a reaction vessel (1) and a bypass (5) with said liquid,
    (b) providing oxygen in a gas space above the reservoir (4) to oxidize said matter,
    (c) providing sodium nitrite to be drawn into an ejector (6) in or at the end of said bypass (5) at the top portion of said vessel (1),
    (d) circulating said liquid through said ejector (6) in or at the end of said bypass (5) at the top portion of said vessel (1) to form a jet stream of said liquid whereby the oxygen and sodium nitrite are drawn into said jet stream, so that said oxygen and sodium nitrite are mixed with said oxidizable matter, thereby oxidizing said oxidizable matter,
    (e) feeding said jet stream of said mixture to said reservoir (4), thereby stirring said reservoir with a stirring means (2) and with said jet stream to accelerate the oxidation of said oxidizable matter and
    (f) circulating a mixture of said liquid and any unreacted oxygen and sodium nitrite through said bypass (5) for it to be ejected through the ejector (6) again.

2. The method according to claim 1 wherein said liquid is selected from the group consisting of:
    a mixture of ferrous sulfate, waste sulfuric acid and water;
    a mixture of ferrous sulfate, waste sulfuric acid, iron chloride and water;
    and a liquid containing sulfur as a result of the desulfurisation of smoke containing sulfur compounds.

**Patentansprüche**

1.  Verfahren zum Oxidieren einer Flüssigkeit, die zu oxidierendes Material enthält, in einem geschlossenen Kreislauf, umfassend die Schritte:

    (a) Spülen eines Reservoirs (4) in einem Reaktionsgefäß (1) und einer Nebenleitung (5) mit der Flüssigkeit.

    (b) Bereitstellen von Sauerstoff in einem Gasraum oberhalb des Reservoirs (4) um das Material zu oxidieren,

    (c) Bereitstellen von Natriumnitrit, welches in eine Saugstrahlpumpe (6) in oder am Ende der Nebenleitung (5) am oberen Teil des Gefässes (1) gezogen werden soll,

    (d) Zirkulierenlassen der Flüssigkeit durch die Saugstrahlpumpe (6) in oder am Ende der Nebenleitung (5) am oberen Teil des Gefässes (1), um einen Strahl der Flüssigkeit zu bilden, wodurch der Sauerstoff und Natriumnitrit in den Strahl hineingezogen werden, so daß der Sauerstoff und Natriumnitrit mit dem oxidierbaren Material vermischt werden, wobei auf diese Weise das oxidierbare Material oxidiert wird.

    (e) Einleiten des Strahls aus dem Gemisch in das Reservoir (4), wobei auf diese Weise das Reservoir mit einem Rührmittel (2) und mit dem Strahl gerührt wird, um die Oxidation des oxidierbaren Materials zu beschleunigen und

    (f) Zirkulierenlassen eines Gemisches aus der Flüssigkeit und eventuell nicht umgesetzten Sauerstoff und Natriumnitrit durch die Nebenleitung (5), damit es erneut durch die Saugstrahlpumpe (6) ausgestoßen wird.

2.  Verfahren nach Anspruch 1, worin die Flüssigkeit ausgewählt wird aus der Gruppe bestehend aus:

    einem Gemisch aus Eisen(II)-sulfat, Schwefelsäureabfällen und Wasser;

    einem Gemisch aus Eisen(II)-sulfat, Schwefelsäureabfällen, Eisenchlorid und Wasser; und einer Flüssigkeit, die infolge der Entschwefelung von Rauch, welcher Schwefelverbindungen enthält, Schwefel enthält.

**Revendications**

1.  Procédé pour oxyder un liquide contenant une mâtière à oxyder dans un circuit fermé comprenant les étapes de:

    (a) purge d'un réservoir (4) dans un vase à réaction (1) et d'une dérivation (5) avec ledit liquide,

    (b) fourniture d'oxygène dans un espace gazeux au-dessus du réservoir (4) pour oxyder ladite matière,

    (c) fourniture de nitrite de sodium à introduire dans un éjecteur (6) dans ou à l'extrémité de ladite dérivation (5) à la partie supérieure dudit vase (1),

    (d) mise en circulation dudit liquide à travers ledit éjecteur (6) dans ou à l'extrémité de ladite dérivation (5) à la partie supérieure dudit vase (1) pour former un courant de projection dudit liquide, grâce à quoi l'oxygène et le nitrite de sodium sont attirés dans ledit courant de projection, de manière que lesdits oxygène et nitrite de sodium soient mélangés à ladite matière oxydable, oxydant ainsi ladite matière oxydable,

    (e) introduction dudit courant de projection dudit mélange dans ledit réservoir (4), agitant ainsi ledit réservoir avec des moyens d'agitation (2) et avec ledit courant de projection pour accélérer l'oxydation de ladite matière oxydable et

    (f) mise en circulation d'un mélange dudit liquide ainsi que de l'oxygène et du nitrite de sodium n'ayant éventuellement pas réagi à travers ladite dérivation (5) pour qu'il soit éjecté à nouveau à travers l'éjecteur (6).

2.  Procédé selon la revendication 1 dans lequel ledit liquide est choisi dans le groupe constitué par:

    un mélange de sulfate ferreux, d'acide sulfurique usé et d'eau;

    un mélange de sulfate ferreux, d'acide sulfurique usé, de chlorure de fer et d'eau;

    et un liquide contenant du soufre à la suite de la désulfuration de fumée contenant des composés soufrés.

# FIG.1

# FIG.2

# FIG. 3

$H_2O$
$H_2SO_4$
$FeSO_4 \cdot 7H_2O$
cooling water

M

$NaNO_2$
$O_2$

6

2

1

4

5

P

# FIG. 4

# FIG.5